(19) Europäisches Patentamt
European Patent Office
Office européen des brevets

(11) **EP 2 931 501 B1**

(12) **FASCICULE DE BREVET EUROPEEN**

(45) Date de publication et mention
de la délivrance du brevet:
**10.05.2017 Bulletin 2017/19**

(21) Numéro de dépôt: **13824605.3**

(22) Date de dépôt: **13.12.2013**

(51) Int Cl.:
*B29C 70/46* (2006.01)   *B29C 33/00* (2006.01)
*B29C 43/36* (2006.01)   *B29C 43/32* (2006.01)
*B29C 43/38* (2006.01)   *B29K 307/04* (2006.01)
*B29K 309/08* (2006.01)   *C08K 3/04* (2006.01)
*C08K 3/40* (2006.01)   *C08K 7/06* (2006.01)
*C08K 7/14* (2006.01)   *C08L 23/06* (2006.01)
*C08L 77/06* (2006.01)

(86) Numéro de dépôt international:
**PCT/FR2013/053080**

(87) Numéro de publication internationale:
**WO 2014/091175 (19.06.2014 Gazette 2014/25)**

(54) **CALE POUR MOULE À COMPRESSION À ÉTANCHÉITÉ AMÉLIORÉE**

**DISTANZSCHEIBE FÜR EINE PRESSFORM MIT VERBESSERTER ABDICHTUNG**

**SHIM FOR A COMPRESSION MOULD WITH IMPROVED SEALING**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.12.2012 FR 1262102**

(43) Date de publication de la demande:
**21.10.2015 Bulletin 2015/43**

(73) Titulaire: **Compagnie Plastic Omnium
69007 Lyon (FR)**

(72) Inventeurs:
• **ARNAUD, Frédéric
F-42220 Bourg Argental (FR)**
• **BOSG, Patrick
F-26240 Saint Barthelemy De Vals (FR)**
• **GILLE, Denis
F-39370 La Pesse (FR)**
• **MONNIN, Serge
F-21610 Fontaine Francaise (FR)**
• **TORRES, Olivier
F-69230 Saint-genis Laval (FR)**
• **SOZET, Jean-Yves
F-07610 Vion (FR)**

(74) Mandataire: **Remy, Vincent Noel Paul
LLR
11 boulevard de Sébastopol
75001 Paris (FR)**

(56) Documents cités:
**EP-A1- 2 524 796        WO-A1-2012/153039
US-A1- 2004 201 132**

EP 2 931 501 B1

**Description**

La présente invention concerne le domaine technique du moulage par compression pour la fabrication de pièces minces, ou coques en plastique renforcé, à partir d'ébauches. On utilise typiquement un matériau composite dit «SMC», ce sigle provenant de l'appellation en langue anglaise «sheet moulding compound» (moulage d'un composé en feuille) ou «sheet moulding composite» (moulage d'un composite en feuille). Le SMC convient particulièrement pour le moulage de grandes pièces.

Il s'agit par exemple d'une feuille constituée de résine thermodurcissable, généralement de type polyester, vinylester, ou époxy, mais éventuellement d'un autre type de résine thermodurcissable, qui imprègne par exemple des fibres de verre ou d'un autre renfort (par exemple avec 20% à 30% poids de renfort), avec souvent des charges et/ou un catalyseur (durcisseur).

L'ébauche est moulée par compression à chaud sous pression dans un moule fermé, en général par déplacement d'un élément mobile du moule par rapport à un élément fixe du moule, ces éléments étant typiquement en acier.

Ce procédé présente cependant un inconvénient bien connu: du fait du déplacement relatif à chaud de ces différents éléments, il n'est guère possible de laisser un jeu fonctionnel suffisamment faible entre l'élément mobile et l'élément fixe du moule pour assurer l'étanchéité entre ces deux éléments, du fait notamment des contraintes de montage du moule, qui imposent, dans l'état de la technique, d'assurer un jeu de montage non nul à la température ambiante, permettant d'assurer également le mouvement relatif des éléments du moule, sans blocage. Ce jeu de montage reste sensiblement identique lorsque le moule est porté à la température de moulage, proche typiquement de 150 °C. Il est d'autant plus important que les pièces à mouler sont de grandes dimensions.

Il en résulte une infiltration de résine entre les éléments fixe et mobile du moule lors du moulage, ce qui conduit à la présence de bavures sur les pièces moulées, typiquement dans un plan parallèle à la direction de fermeture du moule, très généralement verticale. Ces bavures, outre la perte de matière correspondante, génèrent des coûts élevés lors de l'opération ultérieure d'ébavurage, qui requiert un temps notable pour l'opérateur en charge de cette opération.

Il a également déjà été proposé de réaliser des moules de compression comprenant des pièces d'étanchéité mobiles, ou cales mobiles, différentes de l'élément mobile principal du moule, disposées dans un ou plusieurs logements ménagé(s) dans un élément fixe du moule. Cette option technique ne résout cependant pas le problème de façon satisfaisante, ces cales devant également être montées avec un jeu de montage et de fonctionnement générant des bavures. Le document EP 2 524 796 A1 divulgue une cale mobile pour moule à compression selon le préambule de la revendication 1.

Le document US 2004 201132 A1 divulgue un joint d'étanchéité à haute dilatation thermique. L'invention a pour but de remédier à ces inconvénients et de permettre un moulage par compression permettant de réaliser des pièces brutes de moulage avec des bavures très limitées ou nulles.

A cet effet, l'invention a notamment pour objet une cale mobile pour moule à compression pour la fabrication d'une pièce en matériau plastique renforcé par moulage sous une pression de moulage maximale prédéterminée, conformément à la revendication 1. L'invention permet donc de réaliser une étanchéité satisfaisante à chaud (à la température de moulage).

Deux options sont possibles pour la mise en oeuvre du montage à froid (typiquement à température ambiante, ou inférieure à 50°C):

    ⚒ Soit on prévoit un jeu de montage à froid non nul (par exemple compris entre environ 0,005 mm et environ 0,20 mm : Dans ce cas, la dilatation du composant à haute dilatation formé d'un ou de plusieurs matériaux à haute dilatation permet d'annuler le jeu initial de montage à froid, et de générer par ailleurs une contrainte de compression à chaud (à la température de moulage, comprise entre 115 et 170°C et souvent très proche de 150°C) cette contrainte étant suffisante pour obtenir une étanchéité satisfaisante entre l'élément de moulage et la cale, de sorte que les bavures au niveau de la jonction cale mobile/élément de moulage sont très généralement inexistantes, ou au minimum très réduites et dans ce cas faciles à ébavurer, ce qui conduit aussi à un gain appréciable de temps et de matière.

On choisit le ou les matériaux à haute dilatation et la configuration du composant pour éliminer les bavures sur sensiblement la totalité de la ligne de jonction cale mobile / élément de moulage.

    ⚒ Soit on prévoit directement un jeu de montage à froid nul: La cale mobile est alors typiquement montée avec une contrainte de compression à froid, généralement relativement faible. Le montage peut être réalisé en comprimant le composant à haute dilatation au cours du montage, la cale, comprenant typiquement un chanfrein, étant introduite sous contrainte dans son logement disposé dans l'élément de moulage. Une autre possibilité consiste à refroidir le composant à haute dilatation et/ou la cale mobile en dessous de la température de l'élément de moulage avant le montage, ou alternativement à préchauffer l'élément de moulage au dessus de la température de la cale. Dans ce cas de montage à jeu nul, la dilatation du composant à haute dilatation(supérieure à celle de l'élément de moulage) conduit à une augmentation de la contrainte de compression à chaud (à la température de moulage), cette contrainte étant suffisante pour obtenir une étanchéité satisfaisante avec l'élément de moulage.

Une autre caractéristique de la cale selon l'invention est l'utilisation d'un composant à haute dilatation formé d'un ou plusieurs matériaux à haute dilatation, et ayant un module d'Young moyen(ou module d'élasticité moyen) inférieur à 40000 MPa, et de préférence à 20000 MPa dans les conditions de moulage. Ce module d'Young moyen est donc inférieur d'environ 5 fois et de préférence d'environ 10 fois à celui de l'acier, typiquement proche de sensiblement 200000 MPa. Ceci permet d'assurer une élasticité notable de la cale, apte à compenser et absorber des variations dimensionnelles de fabrication sans générer de risques de blocage entre cette cale mobile et l'élément de moulage.

Le terme «coefficient de dilatation moyen» s'applique notamment lorsque le composant à haute dilatation comprend plusieurs matériaux à haute dilatation différents. Il doit se comprendre comme le coefficient de dilatation d'un matériau unique qui, si le composant à haute dilatation était formé dans ce matériau, conduirait à la même dilatation du composant.

De même, le terme «module d'Young moyen» doit se comprendre comme le module d'Young d'un matériau unique qui, si le composant à haute dilatation était formé dans ce matériau, conduirait à une élasticité identique du composant.

Le ou les matériaux à haute dilatation sont typiquement choisis, et le composant à haute dilatation configuré en liaison avec d'autres paramètres: épaisseur de ce composant à haute dilatation dans la cale, coefficient de dilatation moyen de l'élément de moulage (à un même niveau moyen de la zone d'étanchéité dans la direction de fermeture du moule, le moule étant fermé). On peut aussi utiliser par exemple un composant à haute dilatation comprenant plusieurs couches formées chacune par un matériau à haute dilatation différent.

Typiquement, la cale est dépourvue de moyens propres de modification de sa température (tel qu'un chauffage électrique, des canaux de circulation d'un fluide de chauffage et/ou de refroidissement, par exemple pour modifier et /ou contrôler la température de la cale). En effet, l'étanchéité entre la cale mobile et l'élément de moulage est réalisée par dilatation différentielle, sans qu'il soit nécessaire de modifier la température de la cale par des moyens propres à cette cale.

Alternativement, la cale peut comprendre des moyens propres de modification de sa température, pour des raisons liées au moulage, mais pas à l'étanchéité, et dans ce cas, le composant de configuration déterminée, ou composant à haute dilatation ne comprend pas de tels moyens, qui sont inutiles pour cet élément.

De préférence, on utilise un composant à haute dilatation comprenant un ou plusieurs matériau(x) à haute dilatation comprenant chacun une phase solide continue formée d'un matériau plastique, et dans lequel $E_{CHD}$ est compris entre 900 MPa et 7500 MPa. Ceci confère une grande élasticité relative à la cale, permettant d'absorber des variations dimensionnelles entre la cale et son logement correspondant à des tolérances de fabrication classiques.

Des exemples de tels matériaux, dont la phase solide continue est typiquement essentiellement ou principalement organique (c'est à dire comprenant principalement les éléments C,H,O,N, mais pouvant comprendre aussi des hétéro-atomes d'éléments tels que par exemple S ou F) sont indiqués plus loin.

Typiquement, le composant à haute dilatation est soumis à une contrainte de compression dans une direction perpendiculaire à la direction de fermeture du moule comprise entre 4 et 40 MPa, et de préférence entre 6 et 25 MPa lorsque ce composant est porté à la température de moulage. On choisit typiquement une contrainte de compression ne générant qu'un fluage négligeable du matériau du composant dans les conditions de moulage.

De préférence, le coefficient de dilatation moyen $\lambda_{CHD}$ entre 23°C et 150°C du composant à haute dilatation est supérieur d'au moins 50%, et de préférence d'au moins 100% au coefficient de dilatation moyen $\lambda_{EM}$ de l'élément de moulage au niveau moyen de la zone d'étanchéité. Ce coefficient peut être évalué dans un plan perpendiculaire à la direction de fermeture du moule, à un niveau moyen de la zone d'étanchéité sur l'élément de moulage (demi-somme du niveau le plus haut et le plus bas de cette zone d'étanchéité dans la direction de fermeture du moule).

Le terme «jeu» doit se comprendre comme la distance moyenne entre une cale mobile et l'élément de moulage, au niveau de la zone d'étanchéité. Ce jeu, nul à la température de moulage, peut éventuellement être non nul à d'autres températures plus basses.

Le terme «coefficient de dilatation» est le coefficient de dilatation linéaire du matériau solide considéré, qui est parfois dénommé CLTE (pour Coefficient of Linear Thermal Expansion en anglais, ce qui signifie coefficient de dilatation thermique linéaire).

Typiquement, la surface de moulage de l'élément de moulage est formée sur un support en acier comprenant au moins 70 % de fer, et le coefficient de dilatation moyen $\lambda_{CHD}$ du composant à haute dilatation entre 23°C et 150°C est compris entre 22 x$10^{-6}$ et 120 x$10^{-6}$ m/(m.K).

Avantageusement, le composant à haute dilatation s'étend sur une épaisseur constante Ep dans une direction perpendiculaire à la direction de fermeture du moule, telle que:

$$0,02 \times 10^{-3} < Ep \, (\lambda_{CHD} - \lambda_{EM}) \times 127 < 0,25 \times 10^{-3};$$

De préférence:

$$0,05 \times 10^{-3} < Ep \, (\lambda_{CHD} - \lambda_{EM}) \times 127 < 0,20 \times 10^{-3},$$

et de façon très préférée:

$$0,08 \times 10^{-3} < Ep \, (\lambda_{CHD} - \lambda_{EM}) \times 127 < 0,12 \times 10^{-3}.$$

Le terme ($\lambda_{CHD} - \lambda_{EM}$) est représentatif d'un coefficient de dilatation différentielle entre le composant à haute dilatation et celui de l'élément de moulage. Le nombre 127 correspond à la différence de température entre 150°C et 23°C. Il faut noter cependant que la température du composant à haute dilatation peut être légèrement différente de celle de l'élément de moulage. De même la température peut varier très légèrement à l'intérieur du composant à haute dilatation ou à l'intérieur de l'élément de moulage. Dans ce cas, on considère la température moyenne à un niveau moyen de la zone d'étanchéité).

La zone d'étanchéité a généralement une hauteur comprise entre 20 mm et 60 mm, et de préférence comprise entre 25 mm et 50 mm dans la direction de fermeture du moule.

Le composant a généralement une hauteur comprise entre 40 et 120 mm dans la direction de fermeture du moule, et de préférence comprise entre 50 et 110 mm.

De préférence, la hauteur du composant est supérieure à celle de la zone d'étanchéité, de préférence supérieure à au moins 1,5 fois cette hauteur, par exemple comprise entre 1,7 fois et 5 fois cette hauteur. Cette disposition est en particulier utile lorsque le composant n'est pas en contact direct avec l'élément de moulage, le contact direct étant réalisé par exemple par un élément en acier. Dans ce cas, ceci permet d'utiliser une contrainte de compression modérée sur le composant, inférieure à une contrainte de fluage notable du matériau à haute dilatation, tout en exerçant une contrainte importante au niveau de la zone d'étanchéité entre la cale et l'élément de moulage.

De façon préférée, ledit composant à haute dilatation comprend au moins 65% en poids, de préférence au moins 90% en poids, et de façon très préférée 100% en poids d'un ou de plusieurs polymère(s) du groupe formé par un polyétheréthercétone, dit PEEK, un polyimide, dit PI, un polyamide-imide, dit PAI, et un polysulfure de phénylène, dit PPS. Ces matériaux sont en effet des plastiques techniques ayant à la fois un coefficient de dilatation moyen très élevé par rapport à l'acier et de très bonnes caractéristiques mécaniques à des températures proches de 150 °C.

Ces matériaux à haute dilatation présentent typiquement un module d'Young notablement inférieur à 10000 MPa, et typiquement très inférieur à celui de l'acier, conférant une grande élasticité à l'assemblage cale / élément de moulage.

De façon très préférée, ledit composant à haute dilatation comprend au moins 65% en poids, de préférence au moins 90% en poids, et de préférence 100% en poids de PEEK et/ou de PAI, ces matériaux plastiques ayant à la fois un coefficient de dilatation moyen très élevé par rapport à l'acier et d'excellentes caractéristiques mécaniques à des températures proches de 150°C.

De façon générale, on peut utiliser, pour former le composant à haute dilatation, une couche unique d'un matériau à haute dilatation, ou bien plusieurs couches de matériaux à haute dilatation différents.

Le composant à haute dilatation comprend typiquement un jeu de montage à température ambiante, dans la direction de fermeture du moule, permettant la dilatation dans cette direction du matériau à haute dilatation à la température de moulage.

La température ambiante peut être définie conventionnellement comme égale à 23°C. Le montage peut cependant s'effectuer également à des températures différentes, et/ou avec des températures différentes pour la cale mobile et l'élément de moulage.

La cale, ou une partie d'extrémité de la cale, peut comprendre dans toute son épaisseur le composant à haute dilatation. L'épaisseur d'une cale ou partie de cale correspond ici à l'épaisseur minimum de cette cale ou partie de cale, dans une direction perpendiculaire à la direction de fermeture du moule (typiquement l'épaisseur minimum entre deux faces planes de cette cale ou partie de cale, parallèles à la direction de fermeture du moule.

Avantageusement, cependant, la cale comprend sur au moins une partie de son épaisseur (ce qui peut s'appliquer à une partie seulement de la cale, par exemple une extrémité supérieure) dans une direction perpendiculaire à la direction de fermeture du moule, une première partie formée dans un matériau de dureté supérieure à celle de tout matériau compris dans le composant à haute dilatation, et une deuxième partie formée par le composant à haute dilatation, la première partie comprenant la surface de moulage de la cale mobile, alors que la deuxième partie ne comprend pas de surface de moulage.

De préférence, la cale comprend également une troisième partie formée dans un matériau de dureté supérieure à celle de tout matériau compris dans le composant à haute dilatation, la deuxième partie étant disposée en sandwich entre la première partie et la troisième partie.

Ainsi, c'est la première partie de la cale, typiquement en acier, qui est en contact glissant avec l'élément de moulage, typiquement aussi en acier, et avec le produit à mouler qui peut avoir des caractéristiques d'abrasivité ou d'agressivité chimique notables. La deuxième partie de la cale, comprenant le composant dont le matériau à haute dilatation est plus fragile, est ainsi protégée de ces conditions opératoires difficiles. Avec la présence de la troisième partie, la deuxième partie relativement fragile n'est plus du tout soumise aux contraintes mécaniques de frottement lors du déplacement de la cale mobile.

L'invention concerne également un moule à compression pour la fabrication d'une pièce en matériau plastique renforcé par moulage sous une pression de moulage maximale prédéterminée, comprenant un élément de moulage, comprenant au moins une cale mobile telle que définie précédemment.

Typiquement, le jeu entre la cale et l'élément de moulage à la température ambiante de 23°C est compris dans l'intervalle [0 mm ; 0,2 mm].

Avantageusement, l'effort exercé par la cale sur l'élément de moulage au niveau de la zone d'étanchéité, lorsque l'élément de moulage est porté à la température de moulage, est au moins égal à 6 fois, et de préférence au moins égal à 10 fois l'effort exercé sur la cale par la pression d'un matériau de moulage sur la surface de moulage (36) sur la cale, à la pression de moulage maximale prédéterminée, typiquement comprise entre 8 MPa et 25 MPa.

De préférence, toutes les cales mobiles du moule comprennent un composant à haute dilatation sur une partie au moins de leur épaisseur. Ainsi, la surface de moulage de l'élément de moulage est délimitée et entourée à sa périphérie par une surface de moulage formée par la réunion d'une pluralité de surfaces de moulage élémentaires formées chacune par la surface de moulage d'une cale mobile, chacune des cales mobiles étant telles que définies précédemment.

Ceci permet typiquement de supprimer les bavures au niveau de toutes les jonctions entre les cales mobiles et l'élément de moulage.

L'invention concerne également un procédé de moulage à compression conformément à la revendication 18.

Typiquement, le procédé comprend au moins les étapes suivantes :

- montage du moule à une ou plusieurs température(s) inférieure(s) à 50°C, chaque cale mobile étant insérée dans un logement compris dans l'élément de moulage,
- préchauffage du moule à une température de moulage supérieure à 110°C, par exemple comprise entre 115°C et 170°C,
- moulage d'au moins une pièce à une température de moulage,
- démoulage de la pièce à une température de démoulage supérieure à 115°C, et de préférence supérieure ou égale à 95% de la température de moulage, par notamment ouverture du moule et déplacement de chacune des cales mobiles, de préférence pour les placer dans une position de début de moulage, sans que chacune de ces cales mobiles ne sorte complètement de son logement,
- moulage d'au moins une autre pièce sans refroidissement du moule en dessous de 115°C.

Ce procédé permet de monter le moule à température ambiante ou inférieure à 50°C, avec un jeu fonctionnel de montage non nul, par exemple entre 0,005 et 0,2 mm, puis d'obtenir à chaud un jeu nul. Il permet aussi de monter directement le moule avec un jeu de montage nul à température ambiante ou inférieure à 50°C, en mettant à profit l'élasticité du composant compris dans la cale.

Cette élasticité permet également de pouvoir réaliser à la température de moulage un déplacement de la cale ou des cales (glissement répétitif par rapport à l'élément de moulage), du fait que les cales ne sortent pas de leur logement. De plus, cette élasticité réduit fortement les risques de blocage. La présente divulgation concerne enfin une pièce de véhicule automobile, par exemple un panneau d'ouvrant (caisson, ou peau de hayon, ou porte latérale, ou doublure de capot), un plancher, un panneau de toit, une pièce de structure (renfort de pavillon, pied avant ou milieu ou arrière, support d'aile, bac pour batterie) une façade avant technique, ou une aile, en matériau du type comprenant une résine thermodurcissable, et un renfort, ce renfort comprenant par exemple des billes ou des fibres d'un matériau du groupe formé par le verre, le carbone, l'aramide ou le polyéthylène, cette pièce étant fabriquée par un procédé comprenant une étape de moulage telle que mentionnée précédemment selon la revendication 18, et comprend une surface extérieure présentant une continuité de surface sensiblement exempte de traces de finition mécanique par ponçage et/ou meulage et/ou coupage, et/ou fraisage. L'absence de points anguleux (discontinuités de surface) évite des concentrations de contraintes locales, par exemple dues à des vibrations. Elle renforce aussi la résistance chimique, par exemple à la corrosion, ceci étant encore amplifié dans le cas d'une pièce revêtue après moulage, par exemple une pièce peinte. Les discontinuités sont des zones de fragilité du revêtement.

L'état de surface est donc typiquement un état de surface brut de moulage, et non un état de surface de finition mécanique.

Pour un camion, la pièce peut être un pare-chocs, une calandre, une rallonge de porte, un marche-pied, un coin-rond, un coffre (pour outils ou bagages), une rehausse ou un déflecteur de toit, un bandeau.

L'invention sera mieux comprise à la lecture des figures annexées, qui sont fournies à titre d'exemples et ne présentent aucun caractère limitatif, dans lesquelles :

La figure 1 montre schématiquement un moule selon un premier mode de réalisation de l'invention, en position ouverte, vu en coupe dans un plan parallèle à une direction de fermeture du moule.

La figure 2 montre le moule de la figure 1, en position fermée.

La figure 3 montre une partie d'un moule selon un deuxième mode de réalisation de l'invention, vu en coupe dans un plan parallèle à une direction de fermeture du moule.

La figure 4 représente en perspective deux cales mobiles adjacentes d'un même moule selon l'invention.

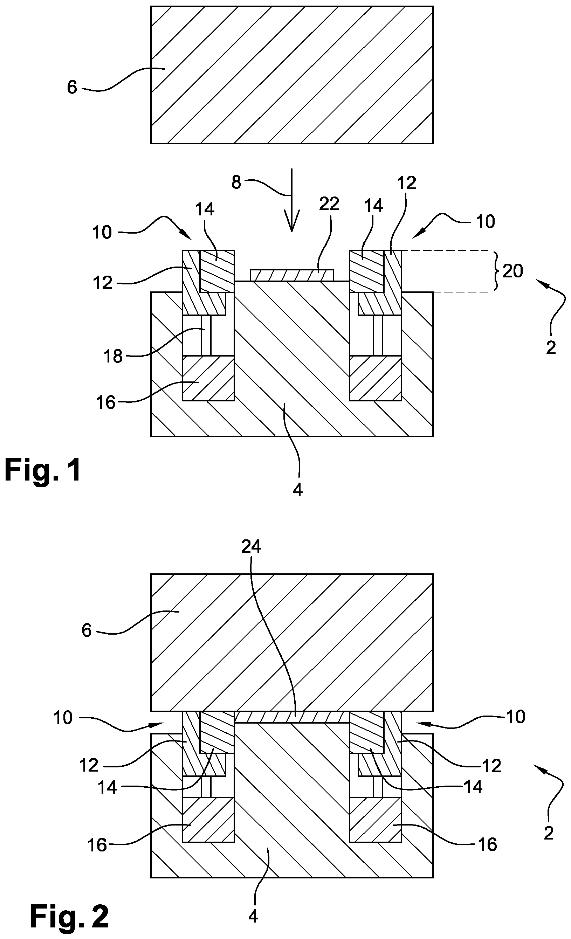

On se réfère maintenant à la figure 1, qui montre un moule à compression 2 pour la fabrication d'une pièce en matériau plastique renforcé, ce moule étant en position ouverte. Le moule 2 comprend un élément de moulage 4, fixe, et un élément de moulage mobile 6, déplaçable selon une direction de fermeture du moule 8. Sur la figure 1 sont également représentées deux cales mobiles 10, disposées dans deux logements de l'élément de moulage 4. Dans ce moule selon un premier mode de réalisation de l'invention, chaque cale mobile comprend une partie 12 en acier et un composant à haute dilatation 14 formé dans un matériau à haute dilatation qui est par exemple du PEEK (polyéthéré-thercétone) semi-cristallin. Chaque logement de l'élément de moulage 4 comprend également au moins un vérin 16, et typiquement une pluralité de vérins, permettant de déplacer au moyen d'au moins une tige de vérin 18 la cale mobile 10 disposée dans ce logement. Le ou les vérins et tige(s) de vérin(s)18 ne sont pas considérés comme des éléments de la cale mobile 10, mais comme des moyens de déplacement de cette cale.

La partie supérieure 20 de chaque cale mobile comprend donc une épaisseur en acier, appartenant à la partie 12 de la cale, et une épaisseur en PEEK, matériau à haute dilatation thermique, formant le composant à haute dilatation.

La figure 1 montre enfin une ébauche de moulage 22 en matériau composite SMC.

Lors du montage à froid de la cale mobile, par exemple à une température ambiante conventionnelle de 23°C, la cale mobile 10 est introduite dans son logement de l'élément de moulage 4 grâce à un jeu fonctionnel de montage, par exemple 0,1 mm.

En variante, on peut utiliser une cale montée à jeu nul, par exemple en refroidissant la cale à 5°C et/ou en préchauffant si nécessaire l'élément de moulage, par exemple à 45°C. Dans ce cas, on peut mettre en oeuvre une légère contrainte de compression dans le matériau du composant à haute dilatation, et entre la cale et l'élément de moulage si, ou lorsque, la cale et le moule reviennent à une température ambiante uniforme de 23°C.

Lors de la montée en température de l'ensemble du moule pour atteindre la température de moulage, voisine de 150°C, la partie supérieure 20 de la cale se dilate de façon plus importante que le logement en acier de l'élément de moulage 4, du fait que le composant à haute dilatation 14 est en PEEK, matériau de coefficient de dilatation très élevé par rapport à celui de l'acier. Il en résulte que le jeu entre la cale mobile 10 et l'élément de moulage 4 au niveau de la partie 20 de cette cale mobile se réduit, ou bien, en cas de jeu initial nul, la compression de la cale augmente.

L'épaisseur de PEEK est avantageusement calculée pour qu'à la température de moulage, le jeu entre la cale et l'élément de moulage soit nul, et que l'effort exercé par la cale sur l'élément de moulage soit 10 fois supérieur à l'effort de pression exercé sur la cale par le matériau de moulage, à la pression maximale de moulage.

De façon très générale, on adapte l'épaisseur du ou des matériaux à haute dilatation formant le composant à haute dilatation pour obtenir la contrainte de compression voulue de la cale. L'épaisseur du ou des matériaux à haute dilatation peut varier typiquement entre 8 mm et 60 mm, et de préférence entre 12 mm et 40 mm.

A titre d'exemple, pour ce qui concerne la dilatation entre la température ambiante et la température de moulage, on peut avoir une cale montée à jeu nul, avec une compression sensiblement nulle, une dilatation théorique de la cale mobile de 0,24 mm (dans le sens de l'épaisseur), une dilatation du logement de la cale de 0,1 mm, et donc une compression de la cale correspondant à une réduction d'épaisseur de 0,14 mm, absorbée par le PEEK.

Sur la figure 1 et les figures suivantes, le plan moyen de la pièce en SMC et des surfaces de moulage correspondantes est représenté perpendiculairement à la direction de fermeture du moule. Ceci n'est cependant pas obligatoire, et l'invention peut aussi être mise en oeuvre avec une ou plusieurs cales obliques, le plan moyen de la pièce moulée formant un angle aigu, ou obtus, avec la direction de fermeture du moule.

On se réfère maintenant à la figure 2, qui représente le même moule que celui de la figue 1, mais en position fermée, après moulage. L'élément de moulage mobile 6 s'est déplacé par rapport à sa position sur la figure 1, pour prendre appui et déplacer les cales mobiles 10 vers le bas, et former en compression l'ébauche en SMC pour obtenir la pièce moulée 24 en SMC. Du fait de la dilatation élevée de chaque composant à haute dilatation 14 en PEEK, le jeu, au moins à la température de moulage, est nul entre le composant à haute dilatation 14 de la cale et l'élément de moulage 4. De plus, la cale exerce un effort de compression sur l'élément de moulage, suffisant pour assurer l'étanchéité entre ces deux éléments. De ce fait, la pièce moulée brute ne comprend plus, ou sensiblement plus de bavures entre le composant à haute dilatation 14 de la cale et l'élément de moulage 4.

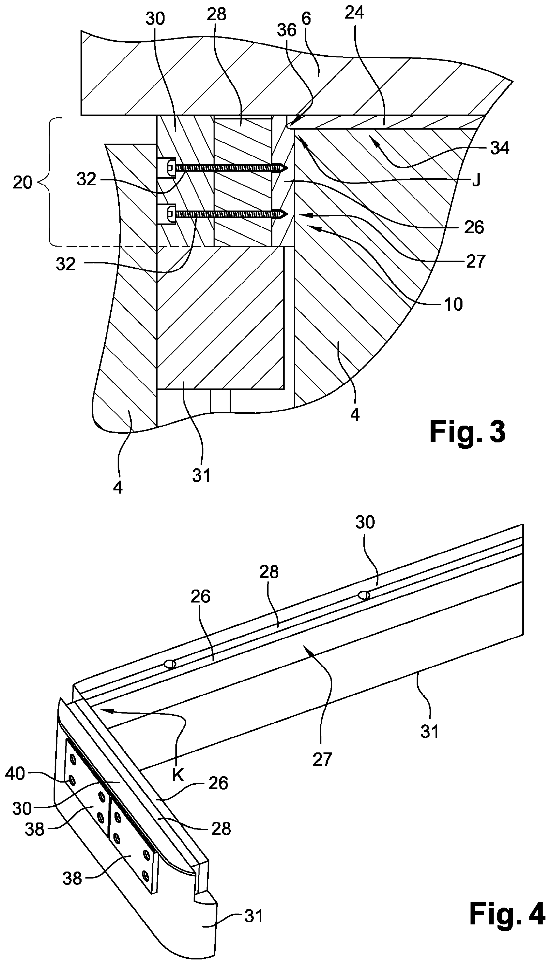

On se réfère maintenant à la figure 3, qui représente une partie d'un moule selon un deuxième mode de réalisation de l'invention, après moulage. Dans ce deuxième mode de réalisation de l'invention, la cale mobile 10 comprend une partie supérieure, référencée 20, formée par trois parties, et épaisseurs superposées :

- une première partie 26 en acier, en contact étanche à la température de moulage avec l'élément de moulage 4 au niveau d'une zone d'étanchéité 27 qui s'étend sur la partie de la hauteur de la première partie 26 qui est en contact avec l'élément de moulage 4. Il y a notamment contact étanche au niveau du point de jonction J sur la figure 3, correspondant à une ligne de jonction des surfaces de moulage de la cale et de l'élément de moulage.
- une deuxième partie 28 formée par un composant à haute dilatation en PEEK (ou par un empilage de plusieurs matériaux à haute dilatation),
- une troisième partie 30 en acier, (s'étendant dans la partie supérieure 20, de la cale mobile 10).

Cette cale 10 comprend également une partie inférieure 31 en acier, d'un seul tenant avec la troisième partie 30.
Ces trois parties 26, 28, et 30 sont assemblées par des vis 32, la deuxième partie 28 en PEEK étant disposée en sandwich entre les première et troisième parties 26 et 30. Ainsi, le composant à haute dilatation en PEEK, plus fragile mécaniquement que l'acier, ne subit pas de contraintes de frottement lors du déplacement en translation de la cale mobile 10. De plus, il n'est pas en contact avec le produit à mouler, qui forme la pièce moulée 24, ce produit pouvant être abrasif ou avoir une réactivité chimique notable.
Les vis 32 sont typiquement montées à froid avec un jeu autorisant la dilatation différentielle ultérieure, au niveau de la deuxième partie 28, entre le PEEK de cette deuxième partie 28 et le matériau des vis, typiquement de l'acier. On peut également calibrer ce jeu en utilisant des rondelles élastiques, par exemple des rondelles Belleville, qui seront montées à contrainte faible ou nulle, et mises en contrainte à chaud du fait de la dilatation du PEEK.
Dans d'autres modes de réalisation, la tête de vis peut se trouver dans le matériau à haute dilatation, le filetage restant dans une partie en acier.
La figure 3 montre également la surface de moulage 34 sur l'élément de moulage 4 et la surface de moulage 36 sur la cale mobile. Du fait de l'étanchéité à chaud obtenue, ces deux surfaces de moulage viennent en continuité entre elles, avec étanchéité au cours du moulage, de sorte qu'il n'y a pas de formation de bavures au niveau de la ligne de jonction correspondant au point de jonction J sur la figure 3.
Le moule de la figure 3 comprend quatre cales mobiles telles que précédemment décrites (une seule étant représentée), chacune comprenant une surface de moulage 36, les quatre surfaces de moulage 36 formant ensemble une surface de moulage unique entourant la surface de moulage 34 de l'élément de moulage. Deux cales mobiles adjacentes sont typiquement perpendiculaires entre elles, deux cales opposées étant parallèles entre elles.
On se réfère maintenant à la figure 4, qui représente deux cales mobiles adjacentes du type précédemment décrit, comprenant chacune une partie supérieure comprenant une deuxième partie formée par un composant à haute dilatation en PEEK 28, en sandwich entre les première et troisième parties en acier 26 et 30. Chaque première partie 26 d'une cale mobile est en contact avec la première partie 26 de la cale mobile adjacente, ce qui assure une bonne étanchéité au niveau du coin K. Plus précisément, au niveau d'un coin K entre deux cales mobiles adjacentes, le bord d'une première partie 26 est en contact avec le flanc de l'autre première partie 26.
Dans le mode de réalisation de la figure 4, chaque cale comprend également des plaques de serrage 38, disposées dans un évidement de la partie 30, chaque plaque 38 comprenant des trous 40 pour des vis de serrage.
L'invention n'est pas limitée aux modes de réalisation présentés et d'autres modes de réalisation apparaîtront clairement à l'homme du métier. Il est notamment possible d'utiliser, conjointement ou en substitution à des caractéristiques techniques exposées précédemment, toute(s) caractéristique(s) technique(s) connue(s) de l'état de la technique, dans la mesure où il n'y a pas d'incompatibilité avec la mise en oeuvre de l'invention. En particulier, d'autres matériaux à haute dilatation que le PEEK pourront être utilisés pour la mise en oeuvre de l'invention.

**Revendications**

**1.** Cale mobile pour moule à compression (2) pour la fabrication d'une pièce (24) en matériau plastique renforcé par moulage sous une pression de moulage maximale prédéterminée, le moule comprenant un élément de moulage (4), cette cale mobile (10) étant déplaçable en translation parallèlement à une direction (8) de fermeture du moule, ladite cale mobile (10) ayant une surface de moulage (36) destinée à venir en continuité, lors du moulage, avec une surface de moulage (34) sur l'élément de moulage,

**caractérisée en ce que** cette cale mobile (10) comprend sur une partie au moins de son épaisseur, dans une direction perpendiculaire à la direction de fermeture du moule, au moins un composant de configuration déterminée, dit composant à haute dilatation, comprenant un ou plusieurs matériau(x) à haute dilatation, ce composant à haute dilatation ayant un coefficient de dilatation thermique linéaire moyen suffisant pour que le jeu entre la cale et l'élément de moulage soit nul au moins lorsque au cours du moulage, ce composant à haute dilatation est porté à au moins une température de moulage $T_M$ comprise entre 115°C et 170°C, ce composant à haute dilatation ayant de plus un module d'Young moyen à la température de moulage, soit $E_{CHD}$, inférieur à 20000 MPa,
**et en ce que** la configuration du composant à haute dilatation et le ou les matériau(x) à haute dilatation formant ce composant sont choisis de façon à ce que lorsque la cale est montée dans le moule et que au cours du moulage, ce composant à haute dilatation est porté d'une température ambiante de 23°C à ladite température de moulage, la dilatation de ce composant à haute dilatation génère au niveau d'une zone d'étanchéité entre la cale et l'élément de moulage une contrainte de compression dans une direction perpendiculaire à la direction de fermeture du moule, ou bien augmente la contrainte de compression si celle-ci existe à la température ambiante, la contrainte de compression étant suffisante, lorsque ce composant à haute dilatation est à la température de moulage, pour assurer au cours du moulage l'étanchéité entre ladite cale mobile (10) et l'élément de moulage (4), la température $T_M$ étant considérée à un niveau moyen de cette zone d'étanchéité.

**2.** Cale selon la revendication 1, dans lequel le composant à haute dilatation comprend un ou plusieurs matériau(x) à haute dilatation comprenant chacun une phase solide continue formée d'un matériau plastique, et dans lequel $E_{CHD}$ est compris entre 900 MPa et 7500 MPa.

**3.** Cale selon la revendication 1 ou 2, dans lequel le composant à haute dilatation est soumis à une contrainte de compression dans une direction perpendiculaire à la direction de fermeture du moule comprise entre 4 et 40 MPa, et de préférence entre 6 et 25 MPa lorsque ce composant est porté à la température de moulage.

**4.** Cale selon l'une quelconque des revendications 1 à 3, dans lequel le coefficient de dilatation moyen $\lambda_{CHD}$ entre 23°C et 150°C du matériau à haute dilatation est supérieur d'au moins 50%, et de préférence d'au moins 100% au coefficient de dilatation moyen $\lambda_{EM}$ de l'élément de moulage (4) au niveau moyen de la zone d'étanchéité.

**5.** Cale selon l'une quelconque des revendications 1 à 4 dépourvue de moyens propres de modification de sa température.

**6.** Cale selon la revendication 4, dans lequel la surface de moulage (34) de l'élément de moulage est formée sur un support en acier comprenant au moins 70% en poids de fer, et le coefficient de dilatation moyen $\lambda_{CHD}$ dudit composant à haute dilatation entre 23°C et 150°C est compris entre 22 x10-6 et 120 x10-6 m/(m.K).

**7.** Cale selon l'une des revendications 4 et 6, dans lequel le composant à haute dilatation s'étend sur une épaisseur constante Ep dans une direction perpendiculaire à la direction de fermeture du moule, telle que 0,02 x 10-3 < Ep ($\lambda_{CHD}$ - $\lambda_{EM}$) x 127 < 0,25 x 10-3.

**8.** Cale selon l'une quelconque des revendications 1 à 7, dans lequel la zone d'étanchéité a une hauteur comprise entre 20 et 60 mm dans la direction de fermeture du moule.

**9.** Cale selon l'une quelconque des revendications 1 à 8, dans lequel le composant a une hauteur comprise entre 40 et 120 mm dans la direction de fermeture du moule.

**10.** Cale selon l'une quelconque des revendications 1 à 9, dans lequel ledit composant à haute dilatation comprend au moins 65% en poids, et de préférence au moins 90% en poids d'un ou plusieurs polymère(s) du groupe formé par une polyétheréthercétone, dit PEEK, un polyimide, dit PI, un polyamide-imide, dit PAI, et un polysulfure de phénylène, dit PPS.

**11.** Cale selon la revendication 10, dans lequel ledit composant à haute dilatation comprend au moins 65% en poids, et de préférence au moins 90% en poids, de PEEK et/ou de PAI.

**12.** Cale selon l'une quelconque des revendications 1 à 11, dans lequel la cale comprend, sur au moins une partie de son épaisseur dans une direction perpendiculaire à la direction de fermeture du moule, une première partie (26) formée dans un matériau de dureté supérieure à celle de tout matériau compris dans le composant à haute dilatation , et une deuxième partie (28) formée par le composant, la première partie (26) comprenant la surface de moulage (36) de la cale mobile, alors que la deuxième partie (28) ne comprend pas de surface de moulage.

**13.** Cale selon la revendication 12 dans lequel ladite partie au moins de la cale comprend également une troisième partie (30) formée dans un matériau de dureté supérieure à celle de tout matériau compris dans le composant à haute dilatation, la deuxième partie (28) étant disposée en sandwich entre la première partie (26) et la troisième partie (30).

**14.** Moule à compression (2) pour la fabrication d'une pièce (24) en matériau plastique renforcé par moulage sous une pression de moulage maximale prédéterminée, comprenant un élément de moulage (4), **caractérisé en ce qu'**il comprend au moins une cale mobile selon l'une quelconque des revendications 1 à 12.

**15.** Moule selon la revendication 14, dans lequel le jeu entre la cale et l'élément de moulage à la température ambiante de 23°C est compris dans l'intervalle [0 mm ; 0,2 mm].

**16.** Moule selon la revendication 14 ou 15, dans lequel l'effort exercé par la cale sur l'élément de moulage au niveau de la zone d'étanchéité, lorsque l'élément de moulage est porté à la température de moulage, est au moins égal à 6 fois, et de préférence au moins égal à 10 fois l'effort exercé sur la cale par la pression d'un matériau de moulage sur la surface de moulage (36) de la cale, à la pression de moulage maximale prédéterminée.

**17.** Moule selon l'une quelconque des revendications 14 à 16, comprenant une pluralité de cales mobiles (10), dans lequel la surface de moulage (34) sur l'élément de moulage est délimitée et entourée à sa périphérie par une surface de moulage formée par la réunion d'une pluralité de surfaces de moulage élémentaires formées chacune par la surface de moulage (36) d'une cale mobile, chacune des cales mobiles (10) étant selon l'une des revendications 1 à 12.

**18.** Procédé de moulage à compression **caractérisé en ce que** l'on utilise un moule selon l'une des revendications 14 à 17, et comprenant au moins les étapes suivantes :

- montage du moule (2) à une ou plusieurs température(s) inférieure(s) à 50°C, chaque cale mobile étant insérée dans un logement aménagé dans l'élément de moulage,
- préchauffage du moule à une température de moulage supérieure à 110°C, par exemple comprise entre 115°C et 170°C,
- moulage d'au moins une pièce (24) à une température de moulage,
- démoulage de la pièce à une température de démoulage supérieure à 115°C, et de préférence supérieure ou égale à 95% de la température de moulage, par notamment ouverture du moule (2) et déplacement de chacune des cales mobiles (10), de préférence pour les placer dans une position de début de moulage, sans que chacune de ces cales mobiles (10) ne sorte complètement de son logement,
- moulage d'au moins une autre pièce (24) sans refroidissement du moule en dessous de 115°C.

**Patentansprüche**

**1.** Bewegliches Abstandsstück für Pressformwerkzeug (2) zur Herstellung eines Teils (24) aus Kunststoff, der durch Formen unter einem vorbestimmten maximalen Formungsdruck verstärkt ist, wobei das Pressformwerkzeug ein Formungselement (4) umfasst, wobei dieses bewegliche Abstandsstück (10) parallel zu einer Schließrichtung des Formwerkzeugs in Translation beweglich ist, wobei das bewegliche Abstandsstück (10) eine Formungsoberfläche (36) hat, die dazu bestimmt ist, beim Formen, mit einer Formoberfläche (34) auf dem Formungselement in Kontinuität zu kommen,
**dadurch gekennzeichnet, dass** dieses bewegliche Abstandsstück (10) über mindestens einen Teil seiner Dicke, in einer Richtung senkrecht zu der Schließrichtung des Formwerkzeugs, mindestens eine Komponente mit einer bestimmten Ausgestaltung, so genannte Komponente mit hoher Ausdehnung, umfasst, die ein oder mehrere Material(ien) mit hoher Ausdehnung enthält, wobei diese Komponente mit hoher Ausdehnung einen mittleren linearen Wärmeausdehnungskoeffizienten hat, der ausreicht, damit das Spiel zwischen dem Abstandsstück und dem Formungselement mindestens gleich null ist, wenn diese Komponente mit hoher Ausdehnung im Laufe des Formens auf mindestens eine Formungstemperatur $T_m$ gebracht wird, die zwischen 115 °C und 170 °C beträgt, wobei diese Komponente mit hoher Ausdehnung bei der Formungstemperatur einen mittleren Youngschen-Modul, d. h. $E_{CHD}$, hat, der kleiner als 20.000 MPa ist, und dass die Ausgestaltung der Komponente mit hoher Ausdehnung und das oder die Material(ien) mit hoher Ausdehnung, welche diese Komponente bilden, so gewählt sind, dass, wenn das Abstandsstück in dem Formwerkzeug montiert ist und wenn im Laufe des Formens diese Komponente von einer Umgebungstemperatur von 23 °C auf die Formungstemperatur gebracht ist, die Ausdehnung dieser Komponente mit hoher Ausdehnung im Bereich einer Dichtungszone zwischen dem Abstandsstück und dem Formungselement eine Druckspannung in einer Richtung senkrecht zu der Schließrichtung des Formwerkzeugs erzeugt oder die Druckspannung erhöht, wenn diese bei der Umgebungstemperatur vorhanden ist, wobei die Druckspannung ausreicht, um, wenn diese Komponente mit hoher Ausdehnung auf Formungstemperatur ist, im Laufe des Formens die Dichtigkeit zwischen dem beweglichen Abstandsstück (10) und dem Formungselement (4) sicherzustellen, wobei die Temperatur $T_m$ im mittleren Bereich dieser Dichtungszone betrachtet wird.

2. Abstandsstück nach Anspruch 1, wobei die Komponente mit hoher Ausdehnung ein oder mehrere Material(ien) mit hoher Ausdehnung enthält, die jedes eine kontinuierliche feste Phase enthalten, die von einem Kunststoff gebildet ist, und wobei $E_{CHD}$ zwischen 900 MPa und 7.500 MPa beträgt.

3. Abstandsstück nach Anspruch 1 oder 2, wobei die Komponente mit hoher Ausdehnung einer Druckspannung in einer Richtung senkrecht zu der Schließrichtung des Formwerkzeugs ausgesetzt ist, die zwischen 4 und 40 MPa, und vorzugsweise zwischen 6 und 25 MPa, beträgt, wenn diese Komponente auf die Formungstemperatur gebracht ist.

4. Abstandsstück nach einem der Ansprüche 1 bis 3, wobei der mittlere Ausdehnungskoeffizient $\lambda_{CHD}$ zwischen 23 °C und 150 °C des Materials mit hoher Ausdehnung um mindestens 50 %, und vorzugsweise um mindestens 100 %, größer ist als der mittlere Ausdehnungskoeffizient $\lambda_{EM}$ des Formungselements (4) im mittleren Bereich der Dichtungszone.

5. Abstandsstück nach einem der Ansprüche 1 bis 4, das keine eigenen Mittel zur Änderung seiner Temperatur aufweist.

6. Abstandsstück nach Anspruch 4, wobei die Formungsoberfläche (34) des Formungselements auf einem Träger aus Stahl gebildet ist, der mindestens 70 Gew.-% Eisen enthält, und der mittlere Ausdehnungskoeffizient $\lambda_{CHD}$ der Komponente mit hoher Ausdehnung zwischen 23 °C und 150 °C zwischen $22 \times 10^{-6}$ und $120 \times 10^{-6}$ m/ (m.K) beträgt.

7. Abstandsstück nach einem der Ansprüche 4 und 6, wobei die Komponente mit hoher Ausdehnung sich über eine konstante Dicke Ep in einer Richtung senkrecht zu der Schließrichtung des Formwerkzeugs erstreckt, derart, dass $0,02 \times 10 < Ep \, (\lambda_{CHD} - \lambda_{EM}) \times 127 < 0,25 \times 10^{-3}$.

8. Abstandsstück nach einem der Ansprüche 1 bis 7, wobei die Dichtungszone eine Höhe hat, die zwischen 20 und 60 mm in der Schließrichtung des Formwerkzeugs beträgt.

9. Abstandsstück nach einem der Ansprüche 1 bis 8, wobei die Komponente mit hoher Ausdehnung eine Höhe hat, die zwischen 40 und 120 mm in der Schließrichtung des Formwerkzeugs beträgt.

10. Abstandsstück nach einem der Ansprüche 1 bis 9, wobei die Komponente mit hoher Ausdehnung mindestens 65 Gew.-%, und vorzugsweise mindestens 90 Gew.-%, eines oder mehrerer Polymers bzw. Polymere aus der Gruppe enthält, gebildet von einem Polyetheretherketon, so genanntes PEEK, einem Polyimid, so genanntes PI, einem Polyamidimid, so genanntes PAI, und einem Phenylen-Polysulfid, so genanntes PPS.

11. Abstandsstück nach Anspruch 10, wobei die Komponente mit hoher Ausdehnung mindestens 65 Gew.-%, und vorzugsweise mindestens 90 Gew.-%, PEEK und/oder PAI enthält.

12. Abstandsstück nach einem der Ansprüche 1 bis 11, wobei das Abstandsstück, über mindestens einen Teil seiner Dicke in einer Richtung senkrecht zu der Schließrichtung des Formwerkzeugs, einen ersten Teil (26) umfasst, der aus einem Material mit einer Härte gebildet ist, die größer ist als die jedes beliebigen in der Komponente mit hoher Ausdehnung enthaltenen Materials, und einen zweiten Teil (28) umfasst, der von der Komponente gebildet ist, wobei der erste Teil (26) die Formungsoberfläche (36) des beweglichen Abstandsstücks umfasst, während der zweite Teil (28) keine Formungsoberfläche umfasst.

13. Abstandsstück nach Anspruch 12, wobei der Teil mindestens des Abstandsstücks auch einen dritten Teil (30) umfasst, der aus einem Material mit einer Härte gebildet ist, die höher ist als die jedes beliebigen in der Komponente mit hoher Ausdehnung enthaltenen Materials, wobei der zweite Teil (28) sandwichartig zwischen dem ersten Teil (26) und dem dritten Teil (30) angeordnet ist.

14. Pressformwerkzeug (2) zur Herstellung eines Teils (24) aus Kunststoff, der durch Formen unter einem vorbestimmten maximalen Formungsdruck verstärkt ist, umfassend ein Formungselement (4), **dadurch gekennzeichnet, dass** es mindestens ein bewegliches Abstandsstück nach einem der Ansprüche 1 bis 12 umfasst.

15. Formwerkzeug nach Anspruch 14, wobei das Spiel zwischen dem Abstandsstück und dem Formungselement bei der Umgebungstemperatur von 23 °C in dem Bereich [0 mm; 0,2 mm] liegt.

16. Formwerkzeug nach Anspruch 14 oder 15, wobei die Kraft, die von dem Abstandsstück im Bereich der Dichtungszone auf das Formungselement ausgeübt wird, wenn das Formungselement auf die Formungstemperatur gebracht ist, mindestens gleich dem 6-Fachen, vorzugsweise mindestens gleich dem 10-Fachen, der Kraft ist, die auf das Abstandsstück durch den Druck eines Formungsmaterials auf die Formungsoberfläche (36) des Abstandsstücks ausgeübt wird, bei dem vorbestimmten maximalen Formungsdruck.

17. Formwerkzeug nach einem der Ansprüche 14 bis 16, umfassend eine Vielzahl beweglicher Abstandsstücke (10), wobei die Formungsoberfläche (34) auf dem Formungselement an ihrem Umfang von einer Formungsoberfläche begrenzt und umgeben ist, die durch die Verbindung einer Vielzahl elementarer Formungsoberflächen gebildet ist, die jede von der Formungsoberfläche (36) eines bewegliches Abstandsstücks gebildet sind, wobei jedes der beweglichen Abstandsstücke (10) nach einem der Ansprüche 1 bis 12 ausgebildet ist.

18. Pressformungsverfahren, **dadurch gekennzeichnet, dass** ein Formwerkzeug nach einem der Ansprüche 14 bis 17 verwendet wird, und das mindestens die folgenden Schritte umfasst:

- Montieren des Formwerkzeugs (2) bei einer oder mehreren Temperatur(en) kleiner als 50 °C, wobei jedes bewegliche Abstandsstück in eine Aufnahme eingesetzt ist, die in dem Formungselement ausgebildet ist,
- Vorwärmen des Formwerkzeugs auf eine Formungstemperatur größer als 110 °C, zum Beispiel zwischen 115 °C und 170 °C,
- Formen mindestens eines Teils (24) bei einer Formungstemperatur,
- Entformen des Teils bei einer Entformungstemperatur größer als 115 °C, und vorzugsweise größer oder gleich 95 % der Formungstemperatur, insbesondere durch Öffnen des Formwerkzeugs (2), und Bewegen jedes der beweglichen Abstandsstücke (10), vorzugsweise um sie in einer Formungsausgangsposition zu platzieren, ohne, dass jedes dieser beweglichen Abstandsstücke (10) vollständig aus seiner Aufnahme austritt,
- Formen mindestens eines weiteren Teils (24) ohne Abkühlung des Formwerkszeugs unter 115 °C.

## Claims

1. Mobile shim for compression mold (2) for manufacturing a reinforced plastic part (24) by molding under a predetermined maximum molding pressure, the mold comprising a molding element (4), this mobile shim (10) being displaceable in translation parallel to a mold closing direction (8), said mobile shim (10) having a molding surface (36) intended to come into continuous contact, during molding, with a molding surface (34) on the molding element, **characterized in that** this mobile shim (10) comprises over at least part of its thickness, in a direction perpendicular to the mold closing direction, at least one component of determined configuration, said high expansion component comprising one or more high expansion materials, this high expansion material having a mean coefficient of expansion sufficient so that the clearance between the shim and the molding element is zero at least when, during molding, this high expansion component is heated to at least a molding temperature $T_M$ between 115 °C and 170 °C, this high expansion component having in addition a mean Young's modulus at the molding temperature $E_{CHD}$, less than 20 000 MPa,

and **in that** the configuration of the high expansion component and the one or more high expansion materials forming this component are selected so that when the shim is assembled in the mold and during molding, this high expansion component is heated from an ambient temperature of 23 °C to said molding temperature, the expansion of this high expansion component generates at a sealing region between the shim and the molding element a compression stress in a direction perpendicular to the mold closing direction, or increases the compression stress if it exists at ambient temperature, the compression stress being sufficient, when this high expansion component is at the molding temperature, to guarantee sealing during molding between said mobile shim (10) and the molding element (4), the temperature $T_M$ being considered at a mean level of this sealing region.

2. Shim according to claim 1, wherein the high expansion component comprises one or more high expansion materials each comprising a continuous solid phase made of a plastic material, and wherein $E_{CHD}$ is between 900 MPa and 7500 MPa.

3. Shim according to claim 1 or 2, wherein the high expansion component is subjected to a compression stress in a direction perpendicular to the mold closing direction of between 4 MPa and 40 MPa, and preferably of between 6 MPa and 25 MPa when this component is heated to the molding temperature.

4. Shim according to any one of claims 1 to 3, wherein the mean coefficient of expansion $\lambda_{CHD}$ between 23 °C and 150 °C of the high expansion material is at least 50 %, and preferably at least 100 % greater than the mean coefficient of expansion $\lambda_{EM}$ of the molding element (4) at the mean level of the sealing region.

5. Shim according to any one of claims 1 to 4 having no specific means for changing its temperature.

6. Shim according to claim 4, wherein the molding surface (34) of the molding element is formed on a steel substrate comprising at least 70 % by weight of iron, and the mean coefficient of expansion $\lambda_{CHD}$ of said high expansion component between 23 °C and 150 °C is between 22 x 10$^{-6}$ et 120 x 10$^{-6}$ m/(m.K).

7. Shim according to claim 4 and 6, wherein the high expansion component extends over a constant thickness Ep in a direction perpendicular to the mold closing direction, such that 0.02 x 10$^{-3}$ < Ep ($\lambda_{CHD}$ - $\lambda_{EM}$) x 127 < 0.25 x 10$^{-3}$.

8. Shim according to any one of claims 1 to 7, wherein the height of the sealing region is between 20 mm and 60 mm in the mold closing direction.

9. Shim according to any one of claims 1 to 8, wherein the height of the component is between 40 mm and 120 mm in the mold closing direction.

10. Shim according to any one of claims 1 to 9, wherein said high expansion component comprises at least 65 % by weight, and preferably at least 90 % by weight of one or more polymers from the group consisting of polyetheretherketone, known as PEEK, polyimide, known as PI, polyamide-imide, known as PAI, and polyphenylene sulfide, known as PPS.

11. Shim according to claim 10, wherein said high expansion component comprises at least 65 % by weight, and preferably at least 90 % by weight, of PEEK and/or PAI.

12. Shim according to any one of claims 1 to 11, wherein the shim comprises, over at least part of its thickness in a direction perpendicular to the mold closing direction, a first part (26) made of a material of hardness greater than that of any material in the high expansion component, and a second part (28) formed by the component, the first part (26) comprising the molding surface (36) of the mobile shim, while the second part (28) comprises no molding surface,

13. Shim according to claim 12, wherein said at least part of the shim also comprises a third part (30) made of a material of hardness greater than that of any material in the high expansion component, the second part (28) being sandwiched between the first part (26) and the third part (30).

14. Compression mold (2) for manufacturing a reinforced plastic part (24) by molding under a predetermined maximum molding pressure, comprising a molding element (4), **characterized in that** it comprises at least one mobile shim according to any one of claims 1 to 12.

15. Mold according to claim 14, wherein the clearance between the shim and the molding element at the ambient temperature of 23 °C lies in the range [0 mm; 0.2 mm].

16. Mold according to claim 14 or 15, wherein the force exerted by the shim on the molding element at the sealing region, when the molding element is heated to the molding temperature, is equal to at least 6 times, and preferably at least 10 times the force exerted on the shim by the pressure of a molding material on the molding surface (36) of the shim, at the predetermined maximum molding pressure.

17. Mold according to any one of claims 14 to 16, comprising a plurality of mobile shims (10), wherein the molding surface (34) on the molding element is delimited and surrounded at its periphery by a molding surface formed by the union of a plurality of elementary molding surfaces each formed by the molding surface (36) of a mobile shim, each of the mobile shims (10) being according to one of claims 1 to 12.

18. Compression molding method **characterized in that** a mold according to one of claims 14 to 17 is used and comprising at least the following steps:

> - assembling the mold (2) at one or more temperatures less than 50 °C, each mobile shim being inserted into a housing formed in the molding element,
> - preheating the mold to a molding temperature greater than 110 °C, for example between 115 °C and 170 °C,
> - molding at least one part (24) at a molding temperature,
> - demolding the part at a demolding temperature greater than 115 °C, and preferably greater than or equal to 95 % of the molding temperature, in particular by opening the mold (2) and displacing each of the mobile shims (10), preferably to place them in a molding start position, without each of these mobile shims (10) coming completely out of its housing,
> - molding at least one other part (24) without cooling the mold below 115 °C.

**Fig. 1**

**Fig. 2**

**Fig. 3**

**Fig. 4**

## RÉFÉRENCES CITÉES DANS LA DESCRIPTION

**Documents brevets cités dans la description**

- EP 2524796 A1
- US 2004201132 A1